# EUROPÄISCHE PATENTSCHRIFT

(11) **EP 1 377 797 B1**
(45) Veröffentlichungstag und Bekanntmachung des Hinweises auf die Patenterteilung: **23.05.2018**
(21) Anmeldenummer: 02708248.6
(22) Anmeldetag: 14.02.2002
(51) Int. Cl.: G01C 19/5747

(54) **DREHRATENSENSOR**
ROTATION RATE SENSOR
DETECTEUR DE VITESSE DE ROTATION

(30) Priorität: 21.02.2001 DE 10108197
(43) Veröffentlichungstag der Anmeldung: 07.01.2004
(73) Patentinhaber: ROBERT BOSCH GMBH, 70442 Stuttgart (DE)
(72) Erfinder: WILLIG, Rainer, 71732 Tamm (DE); THOMAE, Andreas, 29625 Anderson (US); KUHLMANN, Burkhard, 72800 Eningen (DE); HAUER, Joerg, 72762 Reutlingen (DE); GOMEZ, Udo-Martin, 71229 Leonberg (DE); GOETZ, Siegbert, 70839 Gerlingen (DE); DOERING, Christian, 70563 Stuttgart (DE); FEHRENBACH, Michael, 72766 Reutlingen (DE); BAUER, Wolfram, 72074 Tuebingen (DE); BISCHOF, Udo, 72827 Wannweil (DE); NEUL, Reinhard, 70567 Stuttgart (DE); FUNK, Karsten, 94304 Palo Alto (US); LUTZ, Markus, Palo Alto, CA 94304 (US); WUCHER, Gerhard, 72762 Reutlingen (DE); FRANZ, Jochen, 72762 Reutlingen (DE)
(86) Internationale Anmeldenummer: PCT/DE2002/000524
(87) Internationale Veröffentlichungsnummer: WO 2002/066929

(56) Entgegenhaltungen:
- WO-A1-02/16871
- WO-A2-01/22094
- DE-A1- 4 414 237
- DE-A1- 4 428 405
- DE-A1- 4 442 033
- DE-A1- 19 519 488
- DE-A1- 19 530 007
- DE-C1- 19 641 284
- JP-A- H1 144 541
- JP-A- 2000 337 884
- US-A- 6 122 961

## Beschreibung

### Stand der Technik

Die Erfindung geht aus von einem Drehratensensor nach der Gattung des unabhängigen Patentanspruchs.

Aus der US 5728936 sind bereits Drehratensensoren bekannt, die denen auf der Oberfläche eines Substrats ein erstes und ein zweites Coriolis-Element angeordnet sind. Die Coriolis-Elemente werden zu Schwingungen in einer ersten Achse angeregt. Die Auslenkungen der Coriolis-Elemente aufgrund einer Coriolis-Kraft in einer zweiten Achse, die ebenfalls parallel zum Substrat ist, werden nachgewiesen. DE-A1-44 42 033, DE-A1-195 19 488, DE-A1-44 28 405, DE-A1-44 14 237, WO-A2-01/22094, WO-A1-02/16871, US-A-6 122 961, JP-A-2000 337884 und JP-A-H11 44541 beschreiben ähnliche Drehratensensoren.

### Vorteile der Erfindung

Der erfindungsgemäße Drehratensensor mit den Merkmalen des unabhängigen Patentanspruchs hat demgegenüber den Vorteil, dass die Coriolis-Kräfte und Kräfte, die durch eine Drehbeschleunigung des Substrats auftreten, unterschiedliche Richtungen aufweisen. Der erfindungsgemäße Drehratensensor ist daher weitgehend unempfindlich gegenüber Drehbeschleunigungen.

Wenn sich die Schwerpunkte der Coriolis-Elemente senkrecht zu einer Verbindungsgeraden zwischen den Schwerpunkten bewegen, so liegen die Auslenkungen der Coriolis-Elemente aufgrund der Coriolis-Kraft im zeitlichen Mittel auf ein und derselben Achse, in der eine Drehbeschleunigung keinerlei Kraftkomponente ausübt. Die Anregung der Schwingungen der Coriolis-Elemente erfolgt besonders einfach durch ein Antriebselement, welches Antriebskräfte durch Federn überträgt. Das Coriolis-Element kann dabei vollständig an diesem Antriebselement aufgehängt werden. Als Anregungsmittel können dabei elektrostatische Kammantriebe an den Antriebselementen vorgesehen werden. Es sind Nachweiselemente vorgesehen, auf die die Coriolis-Kräfte mittels Federn übertragen werden. Dabei sind die Nachweiselemente so an dem Substrat aufgehängt, dass nur eine Bewegung in Richtung der Coriolis-Kräfte erfolgt. Störeffekte aufgrund einer Bewegung der beweglichen Elektroden, die nicht in der Nachweisrichtung sind, werden dadurch unterdrückt. Um eine gegenphasige Schwingung der Coriolis-Elemente zu gewährleisten, sollte sich die gegenphasige Schwingung frequenzmäßig eindeutig von der gleichphasigen Schwingung unterscheiden. Dazu sind Kopplungsfedern zwischen Antriebselementen oder Coriolis-Elementen oder zwischen Antriebselementen und Nachweiselementen vorgesehen.

### Zeichnungen

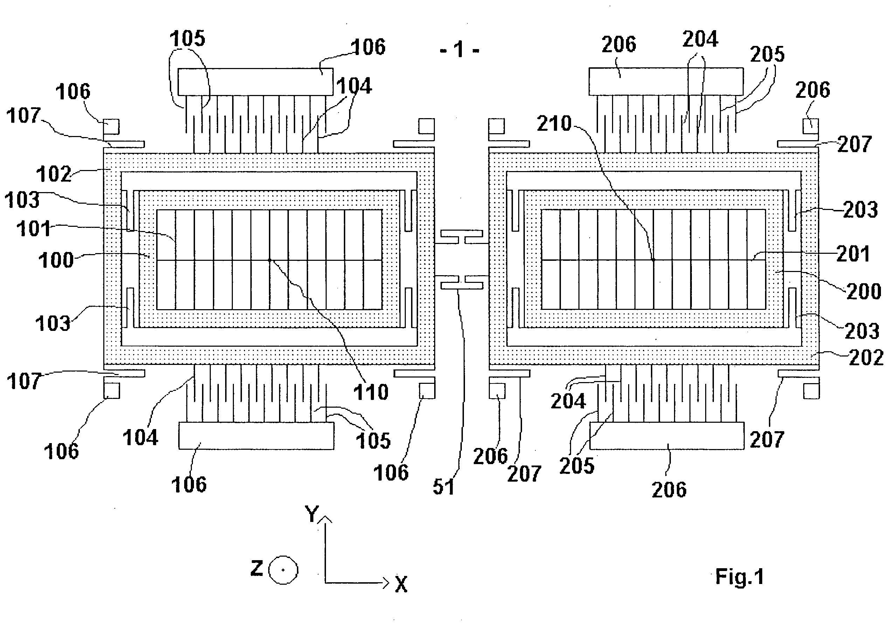

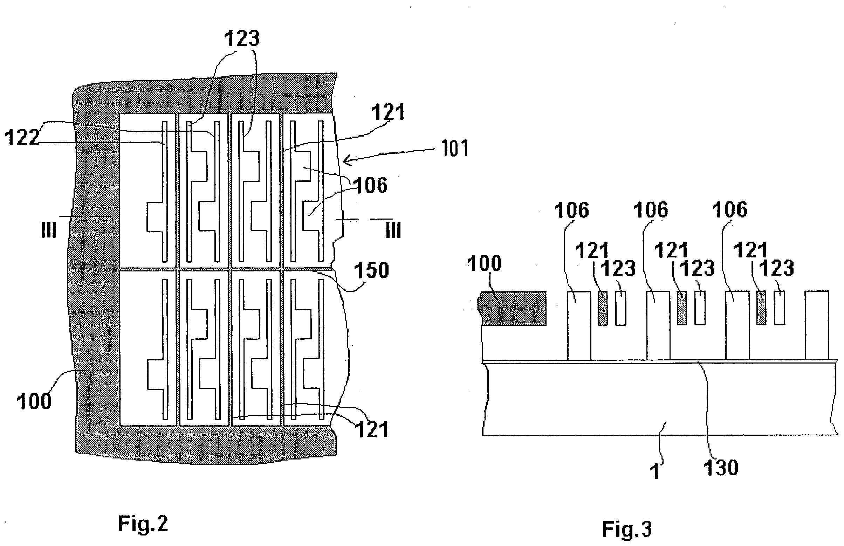

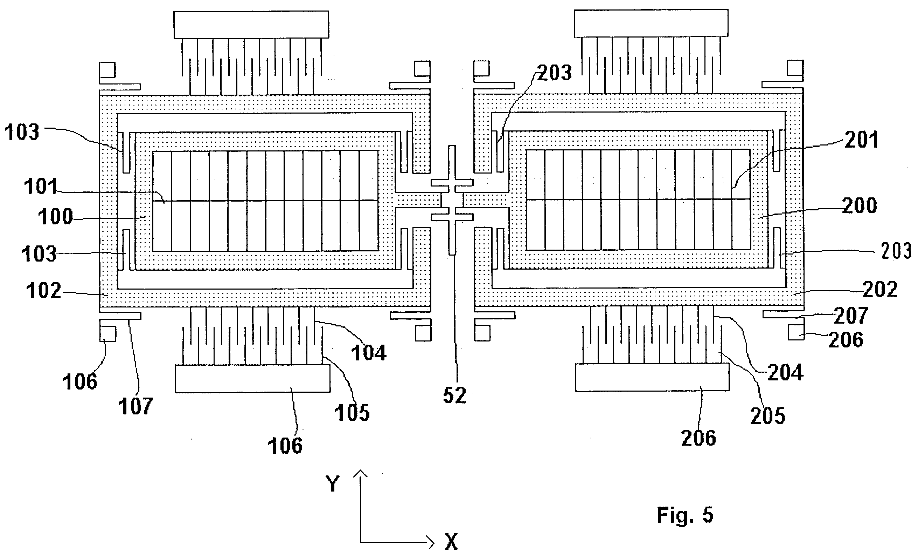

Ausführungsbeispiele der Erfindung werden in den Zeichnungen dargestellt und in der nachfolgenden Beschreibung näher erläutert. Es zeigen Figur 1 eine Aufsicht auf ein erstes Beispiel eines Drehratensensors, welches nicht Teil der beanspruchten Erfindung ist, Figur 2 eine Detailansicht des Drehratensensors nach Figur 1, Figur 3 einen Querschnitt durch die Figur 2, die Figuren 4, 6 und 7 Ausführungsbeispiele von Drehratensensoren und die Figur 5 ein weiteres Beispiel eines Drehatensensors, welches nicht Teil der beanspruchten Erfindung ist, in einer Aufsicht.

### Beschreibung

In den Figuren 1-3 wird ein erstes Beispiel erläutert. In Figur 1 wird dabei eine Aufsicht auf den gesamten Drehratensensor, in der Figur 2 eine Detailansicht eines Teils des Drehratensensors und in der Figur 3 wird eine Seitenansicht eines Querschnitts durch die Figur 2 gezeigt.

In Figur 1 wird eine Aufsicht auf eine in der Figur 1 nicht näher dargestelltes Substrat 1 gezeigt, in dem ein erstes Coriolis-Element 100 und ein zweites Coriolis-Element 200 angeordnet sind. Das erste und das zweite Coriolis-Element 100, 200 sind als rechteckige, rahmenförmige Strukturen ausgebildet. Die rahmenförmigen Coriolis-Elemente 100 und 200 umgeben Detektionsmittel 101, 201, die in der Figur 1 vereinfacht als Gitterlinien dargestellt sind. Die Detektionsmittel werden in der Detailansicht der Figur 2 dargestellt und weiter unten näher erläutert. Die rahmenförmigen Coriolis-Elemente 100, 200 sind von ebenfalls rechteckigen, rahmenförmigen Antriebselementen 102, 202 umgeben. Die Verbindung zwischen den Antriebselementen 102, 202 und den Coriolis-Elementen wird durch Biegefedern 103, 203 hergestellt. Die Biegefedern sind dabei so ausgebildet, dass sie in X-Richtung weich ausgebildet sind und in Y-Richtung steif ausgebildet sind. An den Antriebselementen 102, 202 sind bewegliche Elektroden 104, 204 befestigt, die kammartig in feststehende Elektroden 105, 205 greifen. Die feststehenden Elektroden 105, 205 sind durch Lagerblöcke 106, 206 fest mit dem Substrat 1 verbunden. Weiterhin sind die Antriebselemente 102, 202 mittels Federn 107, 207 mit weiteren Lagerblökken 106, 206 verbunden, die ebenfalls fest mit dem Substrat 1 verbunden sind.

Der Drehratensensor ist somit nur über die Lagerblöcke 106, 206 mit dem Substrat 1 verbunden. Sowohl die Coriolis-Elemente 100, 200 wie auch die Antriebselemente 102, 202 können somit der relativ zum Substrat 1 beliebig bewegt werden. Die Bewegung dieser Elemente wird nur durch die Federelemente 103, 203 und 107, 207 bestimmt.

Die Federn 107, 207 sind so ausgelegt, dass sie in Y-Richtung weich und in X-Richtung steif ausgebildet sind. Die Antriebselemente 102, 202 können sich somit im Wesentlichen nur entlang von Bahnen bewegen, die parallel zur Y-Richtung sind. Die Coriolis-Elemente 100, 200 sind über die Federn 103, 203 mit den Antriebselementen 102, 202 verbunden. Die Coriolis-Elemente 100, 200 können sich somit relativ zu den Antriebselementen 102, 202 im Wesentlichen nur in X-Richtung bewegen. Bei einer Bewegung der Antriebselemente 102, 202 in einer Richtung, die parallel zur Y-Richtung ist, werden natürlich auch die Coriolis-Elemente 100, 200 in diesen Richtungen bewegt. Relativ zum Substrat 1 sind somit die Coriolis-Elemente 100, 200 sowohl in einer Richtung parallel zur Y-Richtung wie auch in X-Richtung beweglich.

Für die Beschreibung der Funktion des Sensors ist noch von jedem der Coriolis-Elemente 100, 200 ein Schwerpunkt 110, 210 angegeben. Die Schwerpunkte liegen jeweils im Mittelpunkt der rahmenförmigen Coriolis-Elemente 100, 200.

Durch Anlegen von elektrischen Spannungen zwischen den beweglichen Elektroden 104, 204 und den feststehenden Elektroden 105, 205 werden die Antriebselemente 102, 202 zu Schwingungen angeregt. Entsprechend werden auch die Coriolis-Elemente 100, 200 zu Schwingungen angeregt. Der Schwerpunkt 110, 210 der Coriolis-Elemente 100, 200 bewegt sich dann jeweils auf einer Achse, die parallel zur Y-Achse ist. Die Bewegungen der beiden Coriolis-Elemente 100, 200 erfolgen somit in Achsen, die parallel zueinander ausgebildet sind. Die Schwerpunkte bewegen sich dabei ohne die Einwirkung einer Corioliskraft (d.h. ohne eine Drehbewegung des Substrats um eine Achse die senkrecht auf dem Substrat 1 steht) auf Geraden die zueinander parallel sind. Wenn es dabei zu einer Drehung des Substrats 1 um die Z-Achse kommt, d.h. um die Achse, die senkrecht auf dem Substrat 1 steht, so wirken auf jedes der Coriolis-Elemente 100, 200 Coriolis-Kräfte, die senkrecht zu der Drehachse und senkrecht zu der Bewegungsachse sind. Diese Kräfte wirken dann in X-Richtung.

Die beweglichen Elektroden 104, 204, zusammen mit den feststehenden Elektroden 105, 205 und den Antriebselementen 102, 202 bilden somit Anregungsmittel, durch die die Coriolis-Elemente 100, 200 zu Schwingungen angeregt werden, bei denen die Schwingungsachsen der Schwerpunkte 110, 210 zueinander parallel ausgerichtet sind. Diese Achsen sind dabei in einem gewissen Abstand zueinander angeordnet, der mindestens die laterale Ausdehnung eines der Coriolis-Elemente 100, 200 in der X-Richtung beträgt.

Die beiden Antriebselemente 102, 202 sind mittels einer Koppelfeder 51 verbunden. Durch diese Koppelfeder wird eine frequenzmäßige Trennung von Schwingungsmoden der Antriebselemente 102, 202 in Y-Richtung erreicht. Für eine gleichphasige Schwingung sind nämlich die Federsteifigkeiten der Federn 107, 207 in Y-Richtung zu berücksichtigen. Für eine gegenphasige Schwingung ist neben den Federsteifigkeiten der Federn 107, 207 auch noch die Federsteifigkeit der Koppelfeder 51 in Y-Richtung zu berücksichtigen. Die Eigenfrequenzen der gleichphasigen Schwingung unterscheidet sich somit von der Frequenz der gegenphasigen Schwingung, was eine gezielte Anregung der unterschiedlichen Schwingungsmoden erleichtert. Gewünscht ist hier insbesondere eine Anregung der Gegenphase-Schwingungsmoden, d.h., wenn sich die linke Seite des Drehratensensors nach unten bewegt, soll sich die rechte Seite nach oben bewegen und umgekehrt. Bei einer derartigen gegenphasigen Schwingung der beiden Hälften des Drehratensensors werden entsprechend auch gegenphasige Bewegungen der Coriolis-Elemente 100, 200 in X-Richtung bewirkt. Die Coriolis-Elemente 100, 200 bewegen sich somit bei einer Drehung entweder aufeinander zu oder entfernen sich voneinander. D.h. auch diese Elemente führen eine gegenphasige Schwingung aus.

Vorteilhaft ist dabei, dass bezogen auf die Ruhelage der Coriolis-Elemente 100, 200 die Bewegung in X-Richtung auf einer gemeinsamen Achse erfolgt. Der Vorteil dieses Prinzips ist, dass eine Drehbeschleunigung um die Z-Achse herum keinen unmittelbaren Einfluß auf die Bewegung der Coriolis-Elemente 100, 200 ausüben kann, da diese von einer Drehbeschleunigung um die Z-Achse herum nicht ausgelenkt werden. Der Drehratensensor ist daher besonders unempfindlich gegenüber Drehbeschleunigungen um die Z-Achse.

In der Figur 2 wird eine vergrößerte Detailansicht der Auswertemittel 101 des Coriolis-Elements 100 der Figur 1 gezeigt. Das rahmenförmige Coriolis-Element 100 umgibt die Auswertemittel 101. Diese sind als gitterförmige Elektroden 121 ausgebildet, wobei eine Vielzahl von gitterförmigen Elektroden 121 innerhalb der rahmenförmigen Struktur des Coriolis-Elements 100 vorgesehen ist. Zur Stabilisierung sind diese gitterförmigen Elektroden 121 noch mit einem Mittelbalken 130 miteinander verbunden. Jede der Elektroden 121 bewegt sich zusammen mit dem Coriolis-Element 100. Die Elektroden 121 sind zwischen feststehenden Elektroden 122, 123 angeordnet, die durch Lager 106 auf dem Substrat 1 befestigt sind. Die Elektroden 112, 123 sind somit als feststehende Elektroden ausgebildet, die sich relativ zum Substrat nicht bewegen.

In der Figur 3 wird ein Querschnitt entlang der Linie III-III der Figur 2 gezeigt. Figur 3 zeigt im Querschnitt das Substrat 1 und eine auf der Oberfläche des Substrats angeordnete Leiterbahn 130. Auf dieser Leiterbahn 130 sind die Verankerungen 106 befestigt und somit fest mit dem Substrat 1 verbunden. Die Lager 106 und auch die daran befestigten Elektroden sind elektrisch leitend und werden durch die Leiterbahn 130 parallel geschaltet. Jede der beweglichen Elektroden 121 ist zwischen einer feststehenden Elektrode 122 und einer feststehenden Elektrode 123 angeordnet. Es werden so zwei Kondensatoren gebildet, zum einen zwischen der beweglichen Elektrode 121 und den Elektroden 122 und zum anderen zwischen der beweglichen Elektrode 121 und der feststehenden Elektroden 123. Diese beiden Kapazitäten sind als Differentialkapazitäten ausgebildet, d.h. bei einer Zunahme der einen Kapazität verringert sich die andere Kapazität entsprechend. Durch die seitliche Versetzung der Lagerblöcke 106 der beiden Elektrodengruppen 122, 123 lassen sich durch entsprechende Leiterbahnen 130 jeweils die entsprechenden Kapazitäten miteinander parallel schalten.

In der Figur 3 ist im Querschnitt sehr gut zu erkennen, dass das Coriolis-Element 100 über dem Substrat 1 angeordnet ist und dass auch die mit dem Coriolis-Element 100 verbundenen Elektroden 121 über dem Substrat 1 angeordnet sind. Im Querschnitt wird der Schnitt durch die Lagerblöcke 106 der Elektroden 122 gezeigt, die durch die Lagerblöcke 106 auf der Leiterbahn 130 angeordnet sind und so fest mit dem Substrat 1 verbunden sind. Die Elektroden 123 werden im Querschnitt der Figur 3 ebenfalls über dem Substrat gezeigt. Sie sind jedoch an einer anderen Stelle mit dem Substrat 1 über eine entsprechende Leiterbahn 130 für diese Elektroden fest mit dem Substrat 1 verbunden.

Für das Substrat 1 und die über dem Substrat angeordneten Elemente wie Corioliselemente 100, 200, Antriebselemente 102, 202, die Federn und Elektroden wird als Matrial vorzugsweise Silizium verwendet, welches durch entsprechende Dotierungen leitend ausgebildet ist. Das Substrat kann durch isolierende Schichten dort wo es erfolderlich ist, elektrisch isoliert werden. Es können aber auch andere Materialien wie Keramik, Glas oder Metalle für die Senoren verwendet werden.

Wesentlich an den Drehratensensoren nach Figur 1 ist, dass bezogen auf die Ruhelage der Schwerpunkte 110, 210 der Coriolis-Elemente 100,200 die Bewegung der Coriolis-Elemente in X-Richtung entlang der Verbindungsachse der Schwerpunkte 110, 210 erfolgt und sich infolgedessen die Coriolis-Elemente bei einer gegenphasigen Anregung der Schwingungen der Coriolis-Elemente in X-Richtung auf einer gemeinsamen Achse aufeinander zu bewegen oder voneinander entfernen. Es kann so der störende Einfluß von Drehbeschleunigungen um die Z-Achse bereits durch das mechanische Design des Drehratensensors unterdrückt werden.

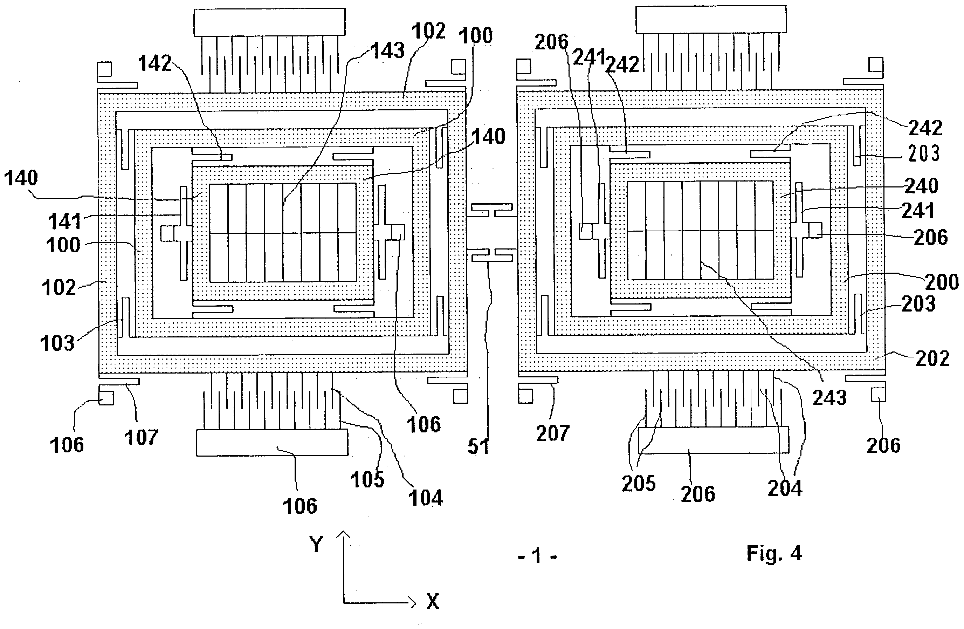

In der Figur 4 wird die Aufsicht auf ein Ausführungsbeispiel eines erfindungsgemäßen Drehratensensors gezeigt. In der Figur 4 wird eine Aufsicht auf ein Substrat 1 gezeigt, auf dem wie in der Figur 1 Coriolis-Elemente 100, 200 angeordnet sind, die von Antriebselementen 102, 202 umgeben sind. Coriolis-Elemente 100, 200 und Antriebselemente 102, 202 sind wieder mit Federn 103, 203 verbunden. Die Antriebselemente 102, 202 sind mittels Federn 107, 207 mit Lagerblöcken 106, 206 verbunden. Weiterhin sind bewegliche Elektroden 104, 204, feststehende Elektroden 105, 205 und Lagerblöcke 106 für die feststehenden Elektroden 105, 205 vorgesehen. Die beiden Antriebselemente 102, 202 sind mittels einer Koppelfeder 51 verbunden. Alle diese Elemente entsprechen den Elementen wie sie bereits in Figur 1 beschrieben wurden und üben die gleiche Funktion aus.

Im Unterschied zu Figur 1 sind jedoch für den Nachweis der Auslenkung der Coriolis-Elemente 100, 200 jeweils ein rahmenförmiges Nachweiselement 140, 240 im Inneren der rahmenförmigen Coriolis-Elemente 100, 200 vorgesehen. Die Nachweiselemente 140, 240 sind ebenfalls als rechteckige Rahmenstrukturen ausgeführt, die mittels Federelementen 141, 241 mit Lagerblöcken 106, 206 mit dem Substrat 1 verbunden sind. Die Federelemente 141, 241 sind weich in X-Richtung und steif in Y-Richtung und erlauben somit im wesentlichen nur, dass die Nachweisrahmen 140, 240 in X-Richtung auslenkbar sind. Die Nachweisrahmen 140, 240 sind durch Federelemente 142, 242 mit den entsprechenden Coriolis-Elementen 100, 200 verbunden. Die Federelemente 142, 242 sind in Y-Richtung weich und in X-Richtung steif ausgelegt und übertragen somit besonders gut die Coriolis-Kräfte in X-Richtung. Im Inneren der Nachweisrahmen 140, 240 sind wieder gitterförmige Nachweiselektroden 143, 243 angeordnet, die in der Figur 4 nur angedeutet werden. Eine Detailansicht dieser Elemente entspricht wieder den Figuren 2 und 3.

Der Vorteil dieser Anordnung ist darin zu sehen, dass die gitterförmigen Elektroden 143, 243 nur in X-Richtung beweglich sind und somit keine Querbewegung relativ zu den feststehenden Elektroden erfolgt. In der Figur 1 bzw. in der Detailansicht nach Figur 2 sind die beweglichen Elektroden 121 unmittelbar mit dem Coriolis-Elemente 100 verbunden, so dass diese beweglichen Elektroden sowohl eine Bewegung in X-Richtung wie auch in Y-Richtung ausführen. Die Bewegung in X-Richtung ist notwendig für die Messung der Auslenkung des Coriolis-Elements 100 in X-Richtung. Die Bewegung in Y-Richtung ist jedoch für die Messung nicht erwünscht und kann eine mögliche Quelle von Fehlern sein. In der Figur 4 sind jedoch die Nachweisrahmen 140, 240 und ihre Verankerungen über die Federn 141, 241 an das Substrat 1 so ausgeführt, dass die beweglichen Elektroden 143, 243 nur eine Bewegung in X-Richtung ausführen. Es wird somit eine mögliche Ursache für Störungen des Mess-Signals beseitigt.

In der Figur 5 wird ein weiteres Beispiel gezeigt. Die Elemente 100, 200, 103, 203, 104, 204, 105, 205, 106, 206, 107, 207 entsprechen den aus der Figur 1 bekannten Elementen und dienen auch den gleichen Funktionen. Im Unterschied zu Figur 1 sind jedoch die rahmenförmigen Antriebselemente 102, 202 nicht als vollständige Rahmen, sondern als offene Rahmen ausgeführt. Dadurch ist es möglich, eine direkte Kopplung der beiden Coriolis-Elemente 100, 200 mittels einer Koppelfeder 52 herzustellen. Durch diese Koppelfeder 52 erfolgt nun eine direkte Kopplung der Schwingungen der Coriolis-Elemente 100, 200. Bei einer gleichphasigen Schwingung der beiden Coriolis-Elemente 100, 200 wird die Feder 52 nicht verformt, so dass die Federkonstante der Feder 52 für diesen Schwingungsmodus nicht zu berücksichtigen ist. Bei einer gegenphasigen Schwingung der Coriolis-Elemente 100, 200 ist jedoch die Federkonstante der Feder 52 zu berücksichtigen, da diese Feder bei dieser Art der Schwingung verformt wird. Die Eigenfrequenzen der gleichphasigen und gegenphasigen Schwingungen der Coriolis-Elemente 100, 200 unterscheiden sich somit in der Frequenz, wodurch eine gezielte Anregung der Schwingungsmoden insbesondere der gegenphasigen Schwingungsmoden, erfolgen kann. Dies erfolgt dadurch, dass entsprechende Anregungsfrequenzen für die elektrischen Signale an den feststehenden und beweglichen Elektroden 104, 204, 105, 205 gewählt werden. Eine direkte Kopplung der Antriebselemente 102, 202 wie es in der Figur 1 gezeigt wurde, kann in diesem Fall entfallen. Aufgrund der Ausführung der Koppelfeder 52 wird zusätzlich eine frequenzmäßige Trennung von Schwingungsmoden der Antriebselemente 102, 202 in Y-Richtung erreicht. Für eine gleichphasige Schwingung sind nämlich die Federsteifigkeiten der Federn 107, 207 in Y-Richtung zu berücksichtigen. Für eine gegenphasige Schwingung ist neben den Federsteifigkeiten der Federn 107, 207 auch noch die Federsteifigkeit der Koppelfeder 52 in Y-Richtung zu berücksichtigen. Die Eigenfrequenz der gleichphasigen Schwingung unterscheidet sich somit von der Frequenz der gegenphasigen Schwingung, was eine gezielte Anregung der unterschiedlichen Schwingungsmoden erleichtert. Gewünscht ist auch hier insbesondere eine gezielte Anregung der Gegenphase-Schwingungsmode.

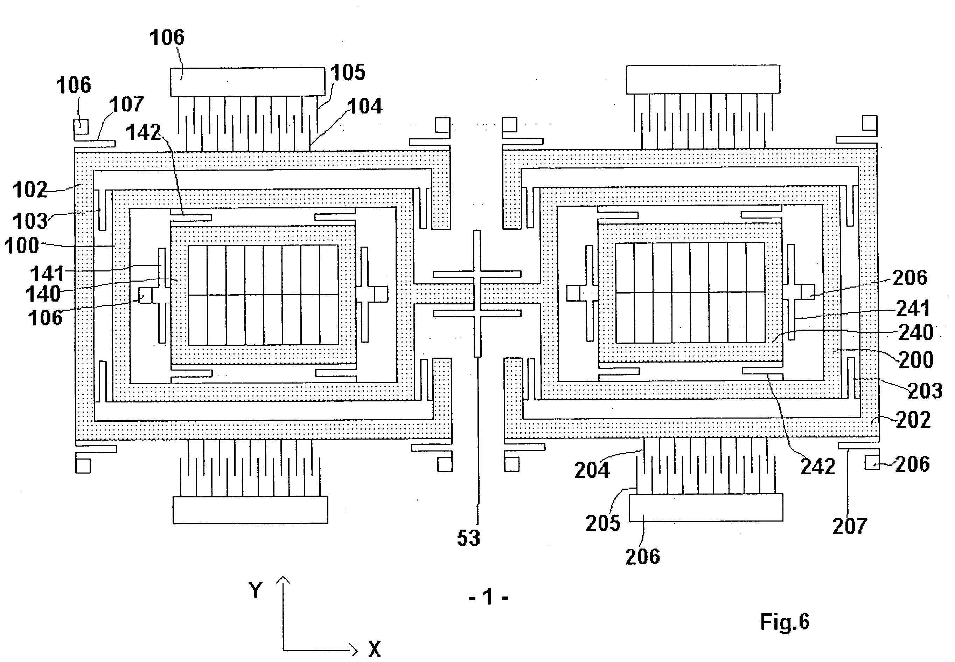

In der Figur 6 wird ein weiteres Ausführungsbeispiel gezeigt, welches im Wesentlichen der Figur 4 entspricht. Die Bezugszahlen bezeichnen auch die gleichen Gegenstände mit den gleichen Funktionen wie in der Figur 4. Im Unterschied zur Figur 4 sind jedoch die Antriebselemente 102, 202 nicht als geschlossene Rahmen ausgeführt, sondern als Rahmen, die auf den einander zugewandten Seiten nicht geschlossen sind. Diese ermöglicht dann die Anordnung einer Koppelfeder 53 zwischen den Coriolis-Elementen 100, 200. Die Koppelfeder 53 ist dabei so ausgelegt, dass sie sowohl in Y-Richtung wie auch in X-Richtung weich ist. Die Feder 53 bewirkt somit eine Kopplung der Schwingungen der Coriolis-Elemente 100, 200 sowohl in Y- als auch in X-Richtung derart, dass sich die gegenphasigen und gleichphasigen Schwingungsmoden in Y- und in X-Richtung jeweils voneinander unterscheiden. Es können somit gezielt die gegenphasigen Schwingungsmoden angelegt werden.

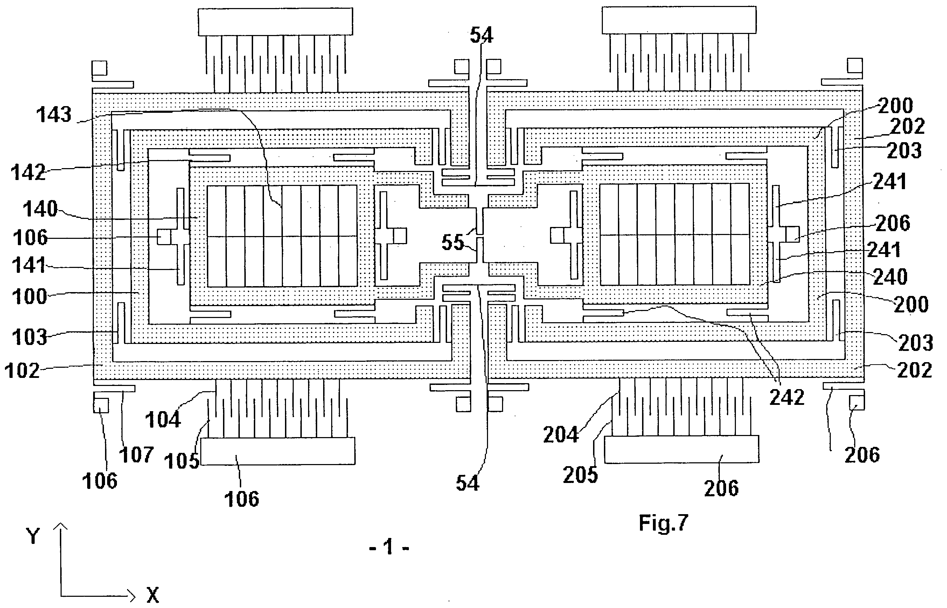

In der Figur 7 wird ein weiteres Ausführungsbeispiel der Erfindung gezeigt, welches im Wesentlichen dem Ausführungsbeispiel in der Figur 4 entspricht. Die Bezugszahlen bezeichnen wieder die gleichen Gegenstände mit den gleichen Funktionen wie in der Figur 4. Im Unterschied zu Figur 4 sind hier jedoch sowohl die Antriebselemente 102, 202 wie auch die Coriolis-Elemente 100, 200 nicht als geschlossene Rahmen, sondern als geöffnete Rahmen ausgeführt, die auf den einander zuweisenden Seiten geöffnet sind. Durch diese Maßnahme ergibt sich die Möglichkeit, die Auswertemittel 143, 243 insbesondere die Nachweisrahmen 140, 240 durch eine Koppelfeder 55 miteinander zu verkoppeln. Weiterhin werden die Antriebselemente 102, 202 durch eine Koppelfeder 54 miteinander gekoppelt. Durch die Koppelfeder 55 wird in X-Richtung eine Kopplung der Auswertemittel 143, 243 bzw. der Nachweisrahmen 140, 240 dergestalt erreicht, dass sich die Eigenfrequenzen der gleichphasigen bzw. gegenphasigen Schwingungen in X-Richtung voneinander unterscheiden. Durch die Kopplung der Antriebselemente 102, 202 wird erreicht, dass sich die Eigenfrequenzen der gleichphasigen und gegenphasigen Schwingungen in Y-Richtung frequenzmäßig voneinander unterscheiden. Durch die Wahl der richtigen Anregungsfrequenzen kann also sichergestellt werden, dass die Elemente der rechten und linken Seite jeweils gegenseitig zueinander schwingen, d.h., dass die Antriebselemente 102, 202 und auch die Detektionselemente 140, 240 jeweils gegenphasig zueinander schwingen.

## Patentansprüche

1. Drehratensensor mit einem ersten Coriolis-Element (100) und einem zweiten Coriolis-Element (200), die nebeneinander über einer Oberfläche eines Substrats (1) angeordnet sind, wobei Anregungsmittel (104, 105, 204, 205) vorgesehen sind, durch die die Coriolis-Elemente (100, 200) zu Schwingungen parallel zu einer ersten
Achse (Y) anregbar sind, wobei Detektionsmittel (101, 201) vorgesehen sind, durch die eine Auslenkung der Coriolis-Elemente (100, 200) aufgrund einer Coriolis
Kraft in einer zweiten Achse (X), die senkrecht zu der ersten Achse ist, nachweisbar sind, wobei die erste und zweite Achse (X, Y) parallel zur Oberfläche des Substrats (1) sind, wobei die Coriolis-Elemente (100, 200) so angeordnet sind, dass die parallel zu der ersten Achse (Y) angeregten Schwingungen des ersten und zweiten Coriolis-Elements (100, 200) gegenphasig zueinander auf Bahnen erfolgen, die ohne die Wirkung einer Coriolis-Kraft zwei zueinander parallele Geraden sind, wobei die Coriolis-Elemente (100, 200) jeweils einen Schwerpunkt (110, 210) aufweisen und die parallelen Geraden senkrecht zu einer Geraden sind, die durch die beiden Schwerpunkte (110, 210) führt, **dadurch gekennzeichnet, dass** für die Detektionsmittel erste und zweite Nachweiselemente (140, 240) vorgesehen sind, die mit Federn (142, 242) mit den Coriolis-Elementen (100, 200) verbunden sind, wobei die Federn in der ersten Achse Y weich und in der zweiten Achse X steif ausgebildet sind, wobei für das erste und zweite Coriolis-Element (100, 200) jeweils ein Antriebselement (102, 202) vorgesehen ist, welches mittels Federn mit dem jeweiligen Coriolis-Element (100, 200) verbunden ist, wobei die Federn (103, 203) in der ersten Achse Y steif und in der zweiten Achse X weich ausgebildet sind, wobei die Antriebselemente mit Federn (107, 207) mit dem Substrat (1) verbunden sind, die in der ersten Achse Y weich und in der zweiten Achse X steif ausgebildet sind und dass die Anregungsmittel (104, 204) mit den Antriebselementen (102, 202) verbunden sind, wobei die Nachweiselemente (140, 240) mit Federn (140, 141, 241) mit dem Substrat (1) verbunden sind, die in der ersten Richtung Y steif und in der zweiten Richtung X weich ausgebildet sind,
wobei die Antriebselemente durch eine Koppelfeder (51) miteinander verbunden sind roder wobei die Coriolis-Elemente (100, 200) durch Koppelfedern (52) miteinander verbunden sind.

2. Drehratensensor nach Anspruch 1, **dadurch gekennzeichnet, dass** die Anregungsmittel als elektrostatische Kammantriebe (104, 204, 105, 205) ausgebildet sind.

3. Drehratensensor nach einem der vorhergehenden Ansprüche, **dadurch gekennzeichnet, dass** die Nachweiselemente (140, 240) bewegliche Elektroden (121) aufweisen, die feststehenden Elektroden (122, 123) gegenüberliegend angeordnet sind, die mit dem Substrat (1) verbunden sind.

4. Drehratensensor nach einem der vorhergehenden Ansprüche, **dadurch gekennzeichnet, dass** die Antriebselemente mit Koppelfedern (54) und die Nachweiselemente mit Koppelfedern (55) miteinander verbunden sind.

## Claims

1. Angular rate sensor having a first Coriolis element (100) and a second Coriolis element (200), which are arranged beside each other above a surface of a substrate (1), excitation means (104, 105, 204, 205) being provided by means of which the Coriolis elements (100, 200) can be excited to oscillate parallel to a first axis (Y), detection means (101, 201) being provided by means of which it is possible to detect a deflection of the Coriolis elements (100, 200) on account of a Coriolis force in a second axis (X), which is perpendicular to the first axis, the first and the second axis (X, Y) being parallel to the surface of the substrate (1), wherein the Coriolis elements (100, 200) are arranged in such a way that the oscillations of the first and second Coriolis element (100, 200), excited parallel to the first axis (Y), are effectuated in anti-phase to one another along trajectories that, without the effect of the Coriolis force, are two straight lines which are parallel to one another, the Coriolis elements (100, 200) each having a centre of gravity (110, 210), and the parallel straight lines being perpendicular to a straight line which leads through the two centres of gravity (110, 210), **characterized in that**, for the detection means, first and second detection elements (140, 240) are provided, which are connected to the Coriolis elements (100, 200) by springs (142, 242), the springs being designed to be weak in the first axis Y and stiff in the second axis x, for the first and second Coriolis element (100, 200), in each case a drive element (102, 202) being provided, which is connected to the respective Coriolis element (100, 200) by means of springs, the springs (103, 203) being designed to be stiff in the first axis Y and weak in the second axis X, the drive elements being connected to the substrate (1) by springs (107, 207), which are designed to be weak in the first axis Y and stiff in the second axis X, and **in that** the excitation means (104, 204) are connected to the drive elements (102, 202), the detection elements (140, 240) being connected to the substrate (1) by springs (140, 141, 241), which are designed to be stiff in the first direction Y and weak in the second direction X, the drive elements being connected to each other by a coupling spring (51) or the Coriolis elements (100, 200) being connected to each other by coupling springs (52).

2. Angular rate sensor according to Claim 1, **characterized in that** the excitation means are formed as electrostatic comb drives (104, 204, 105, 205).

3. Angular rate sensor according to either of the preceding claims, **characterized in that** the detection elements (140, 240) have movable electrodes (121), which are arranged opposite stationary electrodes (122, 123) that are connected to the substrate (1).

4. Angular rate sensor according to one of the preceding claims, **characterized in that** the drive elements are connected to each other by coupling springs (54) and the detection elements are connected to each other by coupling springs (55).

## Revendications

1. Capteur de vitesse de rotation présentant un premier élément de Coriolis (100) et un deuxième élément de Coriolis (200) disposés l'un à côté de l'autre de la surface d'un substrat (1),
des moyens d'excitation (104, 105, 204, 205) étant prévus et permettant d'exciter les éléments de Coriolis (100, 200) à osciller parallèlement à un premier axe (Y),
des moyens de détection (101, 201) étant prévus et permettant de détecter une déviation des éléments de Coriolis (100, 200) suite à l'application d'une force de Coriolis suivant un deuxième axe (X) perpendiculaire au premier axe,
le premier et le deuxième axe (X, Y) étant parallèles à la surface du substrat (1), les éléments de Coriolis (100, 200) étant disposés de telle manière que les oscillations du premier et du deuxième élément de Coriolis (100, 200) excitées parallèlement au premier axe (Y) se produisent en opposition de phase l'une par rapport à l'autre sur des pistes, qui sans l'action d'une force de Coriolis sont deux droites parallèles l'une à l'autre,
les éléments Coriolis (100, 200) présentant chacun un centre de masse (110, 210) et les droites parallèles étant perpendiculaires à une droite qui relie les deux centres de masse (110, 210),
**caractérisé en ce que** des premiers et des deuxièmes éléments de détection (140, 240) reliés aux éléments de Coriolis (100, 200) par des ressorts (142, 242) sont prévus pour les moyens de détection, les ressorts étant déformables suivant le premier axe Y et rigides suivant le deuxième axe X,
des éléments d'entraînement (102, 202) respectifs reliés à chaque élément de Coriolis (100, 200) par des ressorts étant prévus pour le premier et pour le deuxième élément de Coriolis (100, 200), les ressorts (103, 203) étant rigides dans la direction du premier axe Y et déformables dans la direction du deuxième axe X, les éléments d'entraînement étant reliés au substrat (1) par des ressorts (107, 207) déformables dans la direction du premier axe Y et rigides dans la direction du deuxième axe X et **en ce que** les moyens d'excitation (104, 204) sont reliés aux éléments d'entraînement (102, 202),
les éléments de détection (140, 240) étant reliés au substrat (1) par des ressorts (140, 141, 241) rigides dans la première direction Y et déformables dans la deuxième direction X,
les éléments d'entraînement étant reliés l'un à l'autre par un ressort d'accouplement (51) ou
les éléments de Coriolis (100, 200) étant reliés l'un à l'autre par des ressorts d'accouplement (52).

2. Capteur de vitesse de rotation selon la revendication 1, **caractérisé en ce que** les moyens d'excitation sont configurés comme entraînements électrostatiques en peigne (104, 204, 105, 205).

3. Capteur de vitesse de rotation selon l'une des revendications précédentes, **caractérisé en ce que** les éléments de détection (140, 240) présentent des électrodes mobiles (121) qui sont disposées face à des électrodes fixes (122, 123) reliées au substrat (1).

4. Capteur de vitesse de rotation selon l'une des revendications précédentes, **caractérisé en ce que** les éléments d'entraînement sont reliés l'un à l'autre par des ressorts d'accouplement (54) et les éléments de détection sont reliés l'un à l'autre par des ressorts d'accouplement (55).
